**Europäisches Patentamt**

**European Patent Office**

**Office européen des brevets**

(11) Veröffentlichungsnummer: **0 059 896**

**A1**

## (12) EUROPÄISCHE PATENTANMELDUNG

(21) Anmeldenummer: **82101474.3**

(22) Anmeldetag: **26.02.82**

(51) Int. Cl.³: **C 22 C 38/40**
**C 22 C 38/44**

(30) Priorität: **06.03.81 DE 3108588**

(43) Veröffentlichungstag der Anmeldung:
**15.09.82 Patentblatt 82/37**

(84) Benannte Vertragsstaaten:
**AT BE CH DE FR GB IT LI**

(71) Anmelder: **GEORG FISCHER AKTIENGESELLSCHAFT**
**Mühlentalstrasse 105**
**CH-8201 Schaffhausen(CH)**

(72) Erfinder: **Böhm, Hans-Joachim, Ing. grad.**
**Junkernhaus**
**D-7701 Büsingen(DE)**

(54) **Chrom-Nickel-Stahlgussstück.**

(57) Ein Chromstahlgussstück mit der Zusammensetzung:

11,5 - 16,0 Gew. % Cr
2,0 - 10,0 Gew. % Ni
bis      1,5 Gew. % Mo
bis      1,5 Gew. % Si
bis      1,0 Gew. % Mn
bis      0,06 Gew. % C
Rest      Fe und erschmelzungsbedinge Verunreinigungen

und mit einem Ni-Gehalt von mindestens
$Z \% = 1,379 (Cr \% + 2 Si \% + 1,5 Mo\%) - 14,342 - 30 C \% - 0,5 Mn \% - 12 N \%$ und höchstens $Z \% + 2 \%$, und einen C-und Si-Gehalt innerhalb folgender Grenzen:

$0$ Gew. $\% \leq C \leq 0,04$ Gew. $\%$
$0,5$ Gew. $\% \leq Si \leq 1,2$ Gew. $\%$ und

eine Anlasstemperatur des Gussstückes, welche mindestens 10 °C unter dem $AC_1$-Wert liegt, erfüllt die Gesamtheit des folgenden Eigenschaftspakets optimal: hohe Festigkeitswerte, gute Zähigkeit und gute Vergiessbarkeit.

Verwendung findet diese Legierung Wasserturbinenbau, im Kompressorenbau, in Kälteverdichtungs- und Gasverflüssigungsanlagen sowie als Schweisselektrode und für Formstücke mit Wandstärken von über 100 mm.

GEORG FISCHER AKTIENGESELLSCHAFT,   8201 Schaffhausen

2231/FES / 26.2.1981 / MS-bs /

Chromstahlgussstück

Die vorliegende Erfindung betrifft ein Chromstahlgussstück
mit der Legierungszusammensetzung

$$
\begin{array}{lll}
11,5 - 16,0 & \text{Gew. \% Cr} \\
2,0 - 10,0 & \text{Gew. \% Ni} \\
\text{bis} - 1,5 & \text{Gew. \% Mo} \\
\text{bis} - 1,5 & \text{Gew. \% Si} \\
\text{bis} - 1,0 & \text{Gew. \% Mn} \\
\text{bis} - 0,06 & \text{Gew. \% C} \\
\text{Rest} & \text{Fe und erschmelzungsbe-} \\
& \text{dingte Verunreinigungen}
\end{array}
$$

sowie dessen Verwendung.

Stähle mit 11,5 bis 17 Gew. % Cr zeichnen sich durch eine gute
Festigkeit und Korrosionsbeständigkeit aus und sind seit Jahrzehnten eingeführt. Wegen der besseren Schweissbarkeit wurde
der C-Gehalt schrittweise abgesenkt und zwar auf Gehalte von
höchstens 0,07 Gew. % C. Gleichzeitig verbesserte sich die
Zähigkeit, wie sie im Kerbschlagbiegeversuch gemessen wird,
schon merklich.

Es ist seit längerem bekannt, dass sich ein höherer Ni-Gehalt
sowie ein deltaferritfreies Gefüge günstig auf die Zähigkeit auswirken. Dies führte zu den Legierungsvarianten mit ca. 4 und ca. 6 Gew. % Ni. Dabei machte man die Erfahrung, dass bei höherem Si-Gehalt, über 0,5 Gew. % Si, trotzdem schlechte Zähigkeitswerte auftreten. Die Entwicklung ging daher zu Stählen mit möglichst niedrigem Si-Gehalt (0,25 Gew. % Si). Dies führte jedoch zu einer Verschlechterung der Giessbarkeit durch Oxidhautbildung und nicht-metallische Einschlüsse, die durch Schweissen beseitigt werden mussten.

Man stand daher vor der Frage entweder gute Giesseigenschaften oder gute Zähigkeit einzustellen. In der Praxis hat man sich für gute Zähigkeitseigenschaften insbesondere bei dickwandigen Stahlgussstücken entschieden.

Es ist Aufgabe der Erfindung ein Chromstahlgussstück vorzuschlagen bei dem durch eine gute Giessbarkeit, eine bessere Oberflächenqualität des Gussstückes und zugleich gute mechanische Eigenschaften erzielt werden.

Diese Aufgabe wird durch ein Chromstahlgussstück gelöst, das durch die Lehre gemäss des Anspruches 1 gekennzeichnet ist.

Günstige Varianten ergeben sich aus den Nebenansprüchen.

Besonders gute Resultate wurden bei Anlasstemperaturen erzielt die mindestens $10^{\circ}$ C unter dem $AC_1$-Wert liegen.

Das erfindungsgemässe Chromstahlgussstück ist auch für die Verwendung von Schweisselektroden geeignet, sowie für Formstücke mit einer Wandstärke von über 100 mm.

Der günstige Einfluss von Si beim Giessen ist bekannt. Durch systematische Untersuchungen wurde nun festgestellt, dass bei Einhaltung untenstehender Bedingungen der Si-Gehalt in Bezug auf die Zugfestigkeit, Streckgrenze und Kerbschlagzähigkeit mit dem C-Gehalt in der Wirkung direkt austauschbar ist. Zeichnet man ein Diagramm mit dem Si-Gehalt als Ordinate und dem C-Gehalt als Abszisse, so bilden die geprüften Werte für Zugfestigkeit, Streckgrenze und Kerbschlagzähigkeit parabelförmige Linien gleicher Werte. An den Si-Gehalt ist dabei die Bedingung geknüpft, dass die Deltaferritbildung durch Ni über die nachstehende Formel kompensiert wird:

Ni mindestens $(1,379 \times (Cr + 2 Si + 1,5 Mo) - 14,342 - 30 C - 0,5 Mn - 12 N_2$, max. + 2 Gew. % der Gesamtlegierung.

Gleichzeitig darf der Stahl nicht über dem $AC_1$-Punkt angelassen werden, da sonst die Streckgrenze in Abhängigkeit vom C-Gehalt stark absinkt.

Die Legierungszusammensetzungen

| | | |
|---|---|---|
| 0,02 - 0,06 Gew. % C, | max. 0,04 % C, |
| 0,5 - 0,8 Gew. % Si, | 0,5 - 0,8 % Si, |
| 0,4 - 0,8 Gew. % Mn, | 0,4 - 0,8 % Mn, |
| 12 - 13 Gew. % Cr, | 12 - 13 % Cr, |
| 4,0 - 4,5 Gew. % Ni, | 4,5 - 5,0 % Ni, |
| 0,4 - 0,6 Gew. % Mo, | 0,4 - 0,6 % Mo |

stellen besonders günstige Kombinationen der Legierungselemente dar, die die gleichen mechanischen Eigenschaften wie die bisher, verwendeten Legierungen mit

ca. 0,04 % C,
0,3 % Si,
0,6 % Mn,
12,5 % Cr,
3,7 % Ni
0,5 % Mo

ergeben.

Bedingt durch den höheren Si-Gehalt weisen die beschriebenen Chromstahlgusslegierungen bei gleichen mechanischen Eigenschaften, eine wesentlich bessere Giessbarkeit auf. Das heisst, die Zahl und Grösse der durch zusätzliche Bearbeitungszugaben oder durch Schweissen zu beseitigenden Gussfehler
wird stark verringert.

Moderne Herstellungsverfahren wie z.B. das AOD Stahlveredlungsverfahren eignen sich besonders für die Einhaltung der Analysengrenzen einschliesslich des niedrigen C-Gehaltes.

## Beispiele

An Hand von 2 Labor-Induktionsofenchargen (Nr. 1 und 2) in
der Festigkeitsstufe 760 N/mm$^2$, 2 Betriebsinduktionsofenchargen (Nr. 3 und 4) in der Festigkeitsstufe 900 N/mm$^2$ und
2 Betriebs- AOD Chargen (Nr. 5 und 6) in der Festigkeitsstufe
760 N/mm$^2$ sollen die mechanischen Eigenschaften der beschriebenen Stahlgusslegierungen aufgezeigt werden.

Tabelle 1 (Zusammensetzung in Gew. %)

| Stahl Nr. | C | Si | Mn | P | S | Cr | Ni | Mo | $N_2$ |
|-----------|------|------|------|------|------|------|------|------|--------|
| 1 | .015 | .57 | .61 | .016 | .007 | 12,0 | 4,66 | .45 | 0,0208 |
| 2 | .013 | .75 | .66 | .014 | .006 | 11,9 | 5,26 | .45 | 0,0175 |
| 3 | .031 | .65 | .58 | .012 | .003 | 12,2 | 4,10 | .49 | n.b. |
| 4 | .029 | .63 | .54 | .012 | .006 | 12,3 | 4,06 | .49 | n.b. |
| 5 | .010 | .60 | .57 | .017 | .004 | 12,3 | 4,93 | .46 | 0,0132 |
| 6 | .019 | .54 | .62 | .023 | .001 | 12,0 | 4,65 | .49 | 0,0122 |

Tabelle 2 (Physikalische Eigenschaften)

| Stahl Nr. | Streck-grenze (N/mm$^2$) | Zugfestig-keit (N/mm$^2$) | Dehnung (%) | Einschnü-rung (%) | Kerbschlag-arbeit-ISO-V-Proben (J) |
|---|---|---|---|---|---|
| 1 | 632 | 786 | 20 | 60 | 121/116/114 |
| 2 | 649 | 802 | 21 | 65 | 112/110/111 |
| 3 | 911 | 978 | 19 | 57 | 116/110/116 |
| 4 | 895 | 980 | 18 | 55 | 70/ 74/ 76 |
| 5 | 702 | 803 | 22 | 69 | 140/137/140 |
| 6 | 701 | 808 | 22 | 70 | 158/155/153 |

Bei optimalem Verhältnis Festikeit/Zähigkeit

| | | | | | |
|---|---|---|---|---|---|
| 5 | 578 | 785 | 24 | 69 | 140/152/139 |

Bei 0° C    153/141/151

bei - 73° C    130/132/125

bei - 105° C    98/ 92/ 96

bei - 140° C    56/ 56

bei - 200° C    20

Schweisselektroden

Die gleiche Wirkung wie bei den Gusslegierungen tritt auch bei Verwendung als Schweisszusatzwerkstoff (z.B. Schweisselektroden) auf.

Durch die Kombination
- extrem tiefer C-Gehalt
- hoher Si-Gehalt
- Verhindern der Deltaferritbildung durch angepassten Ni-Gehalt gemäss der angegebenen Formel

lassen sich angepasste relativ niedrige Festigkeitswerte (keine harten Stellen), sehr gute Zähigkeitseigenschaften, und ausge-zeichnete Schweisseigenschaften erzielen.

P a t e n t a n s p r ü c h e

2231/FES

1. Chromstahlgussstück der Legierungszusammensetzung

| | | | |
|---|---|---|---|
| 11,5 - 16,0 | Gew. % | Cr |
| 2,0 - 10,0 | Gew. % | Ni |
| bis | 1,5 | Gew. % | Mo |
| bis | 1,5 | Gew. % | Si |
| bis | 1,0 | Gew. % | Mn |
| bis | 0,06 | Gew. % | C |
| Rest | | Fe und erschmelzungsbedingte Verunreinigungen |

gekennzeichnet durch die Kombination folgender Merkmale zur Erzielung eines deltaferritfreien Gefüges, eines unter 50 % liegenden Restaustenitgehalt und einer hohen Oberflächengüte bei gleichzeitig hoher Kerbschlagarbeit:

a) ein Ni-Gehalt von mindestens

$Z \% = 1{,}379$ (Cr % + 2 Si % + 1,5 Mo %) $- 14{,}342 - 30$ C % $- 0{,}5$ Mn % $- 12$ N % und höchstens Z % + 2 %;

b) einen C- und Si-Gehalt innerhalb folgender Grenzen:

$0$ Gew. % $\leq$ C $\leq 0{,}04$ Gew. %

$0{,}5$ Gew. % $\leq$ Si $\leq 1{,}2$ Gew. % und

c) eine Anlasstemperatur des Gussstückes, welche mindestens $10^{\circ}$ C unter dem $AC_1$-Wert liegt.

2. Chromstahlgussstück nach Anspruch 1, dadurch gekennzeichnet, dass der Gehalt an C höchstens 0,03 Gew. % beträgt.

3. Chromstahlgussstück nach den Ansprüchen 1 oder 2, dadurch gekennzeichnet, dass der Cr-Anteil 11,5 - 14,0 Gew. % und der Ni-Anteil 2,0 - 7,0 Gew. % beträgt.

4. Chromstahlgussstück nach den Ansprüchen 1 oder 2, dadurch gekennzeichnet, dass der Cr-Anteil 14,0 - 16,0 Gew. % und der Ni-Anteil 7,0 - 10,0 Gew. % beträgt.

5. Chromstahlgussstück nach Anspruch 1 oder 3, gekennzeichnet durch die Zusammensetzung:

$$0,02 - 0,06 \text{ Gew. \% C,}$$
$$0,5 \phantom{0} - 0,8 \phantom{0} \text{ Gew. \% Si,}$$
$$0,4 \phantom{0} - 0,8 \phantom{0} \text{ Gew. \% Mn,}$$
$$12 \phantom{,00} - 13 \phantom{,0} \text{ Gew. \% Cr,}$$
$$4,0 \phantom{0} - 4,5 \phantom{0} \text{ Gew. \% Ni,}$$
$$0,4 \phantom{0} - 0,6 \phantom{0} \text{ Gew. \% Mo.}$$

6. Chromstahlgussstück nach Anspruch 1 oder 3, gekennzeichnet durch die Zusammensetzung:

$$\text{max. } 0,04 \text{ \% C,}$$
$$0,5 - 0,8 \text{ \% Si,}$$
$$0,4 - 0,8 \text{ \% Mn,}$$
$$12 \phantom{,0} - 13 \phantom{,} \text{ \% Cr,}$$
$$4,5 - 5,0 \text{ \% Ni,}$$
$$0,4 - 0,6 \text{ \% Mo.}$$

7. Verwendung des Chromstahlgussstückes nach einem der Ansprüche 1 bis 6 für Schweisselektroden.

8. Verwendung des Chromstahlgussstückes nach einem der Ansprüche 1 bis 6 für Formstücke mit einer Wandstärke von über 100 mm.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-1 098 368 (INTERNATIONAL NICKEL) <br> * Ansprüche 1-4,6 * | 1,3,5, 6 | C 22 C 38/40 <br> C 22 C 38/44 |
| | --- | | |
| X,Y | FR-A-2 232 608 (SANDVIK, AB) <br> * Anspruch 1 * | 1-6 | |
| | --- | | |
| Y | GB-A-2 022 137 (SCHMIDT-CLEMENS) <br> * Ansprüche 1-4; Seite 2, Zeilen 13-35 * | 1 | |
| | --- | | |
| A | US-A-3 925 064 (TAKAMURA) <br> * Anspruch 1 ; Spalte 1, Zeilen 5-13 * | 1 | |
| | --- | | |
| A | US-A-4 058 417 (BICICCHI) <br> * Anspruch 1 * | 1 | RECHERCHIERTE SACHGEBIETE (Int. Cl. ³) |
| | --- | | |
| A | FR-A-2 439 309 (HITACHI) <br> * Anspruch 2 * | 1 | C 22 C |
| | ----- | | |

Der vorliegende Recherchenbericht wurde für alle Patentansprüche erstellt.

| Recherchenort DEN HAAG | Abschlußdatum der Recherche 21-06-1982 | Prüfer RIES R |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82